# EUROPEAN PATENT SPECIFICATION

(11) **EP 3 482 579 B1**
(45) Date of publication and mention of the grant of the patent: **22.07.2020**
(21) Application number: 17734193.0
(22) Date of filing: 13.06.2017
(51) Int. Cl.: H04W 12/04, H04W 12/06, H04L 29/08, H04W 12/00

(54) **AUTOMATIC SECURE DATA TRANSFER WITH A MOTOR VEHICLE**
AUTOMATISCHE GESICHERTE DATENÜBERTRAGUNG MIT EINEM KRAFTFAHRZEUG
TRANSFERT AUTOMATIQUE ET SÉCURISÉ DE DONNÉES AVEC UN VÉHICULE MOTORISÉ

(30) Priority: 08.07.2016 US 201662360200 P
(43) Date of publication of application: 15.05.2019
(73) Proprietor: Airbiquity, Inc., Seattle, WA 98101 (US)
(72) Inventor: MOINZADEH, Kamyar, Seattle, WA 98101 (US); LEUNG, Keefe, Seattle, WA 98101 (US); BELL, Jack, William, Seattle, WA 98101 (US)
(74) Representative: Whitlock, Holly Elizabeth Ann
(86) International application number: PCT/US2017/037342
(87) International publication number: WO 2018/009313

(56) References cited:
- US-A1- 2009 291 637

## Description

### Technical Field

Embodiments of the present disclosure relate to the field of secure communications, and in particular, to methods and apparatuses associated with automatic secure data transfer with a motor vehicle.

### Background

An OEM (original equipment manufacturer) may embed software on a motor vehicle at a factory; however, there are also schemes to securely update motor vehicle software after the motor vehicle leaves the factory. In one known scheme, the motor vehicles may be updated at a point of sale, such as a dealership.

In the typical scenario, the OEM may provide a portable electronic device that is to be operated by point of sale personnel. The electronic device may couple to the Internet (say through a dealership broadband network device), and establish a secure tunnel network over the Internet between the electronic device and an OEM server. The motor vehicles may be driven a short distance by personnel to a service center, where the personnel may plug the portable electronic device into each motor vehicle, and may operate the portable electronic device and/or the motor vehicle to perform the motor vehicle update (an update may be downloaded from the OEM server, over the secure tunnel network, to the portable electronic device, and then to the motor vehicle).

In some cases it may be desirable to securely update software on the motor vehicles at other points along a supply chain, such as at an intermediary point in the field and prior to reaching the point of sale, for a variety of reasons. However, at some possible times and/or locations along the supply chain the motor vehicles may not be near a service center, and may not even be readily accessible even if they were near a service center (for instance the motor vehicles may be secured to a transport apparatus, arranged very close together, etc.) It may not be possible and/or practical to perform the known schemes for securely updating motor vehicle software at these times and/or locations.

### Summary of the Invention

The claimed invention relates to a device as defined in independent claim 1. Various embodiments are defined in the dependent claims.

### Brief Description of the Drawings

FIG. 1 illustrates a system for automatic secure data transfer with a motor vehicle, in some embodiments.
FIG. 2 is a simplified flow chart illustrating some of the operations that may be performed by the in-vehicle electronic device of FIG. 1, in some embodiments.
FIG. 3 is a simplified flow chart illustrating some of the operations that may be performed other devices described with reference to FIG. 1, in some embodiments.
FIG. 4 is a message sequence chart illustrating some of the operations that may be performed in embodiments that utilize more than one communication channel.

### Detailed Description of Preferred Embodiments

By way of background, motor vehicles typically have more than one power mode, such as a first power mode (e.g., a run power mode) in which both the instrument panel and accessories receive power (the accessories may include but are not necessarily limited to entertainment components), a second power mode (e.g., an accessory power mode) in which the instrument panel does not receive power but the accessories do receive power, and one or more third lower power modes in which the accessories do not receive power but other systems may receive power and continue to operate.

At least one of the one or more third lower power modes may put the motor vehicle in an unattended power state. The unattended power state may be referred to as "off', but in reality some systems do receive power and continue to operate in the unattended power state. For instance, some keyless systems may continue to be powered even after an operator may have "turned off and locked the motor vehicle so that they are ready upon the operator's return to the vehicle.

Also, by way of background, many modern electronic devices provide a way to connect to external servers as clients and perform operations specified by the server, such as updating software on the device. Ensuring security in this process is difficult in uncontrolled environments because the available communication channels are often provided as a typical consumer or commercial Internet connection, which could be security-compromised in any number of ways. In the case of in-vehicle equipment, the consequences associated with security being compromised may be significant.

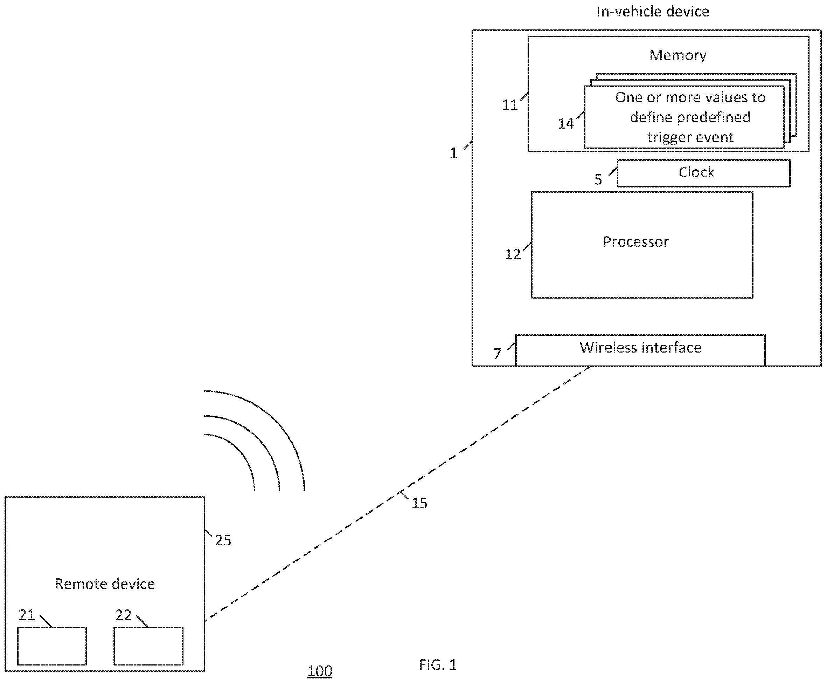

FIG. 1 illustrates a system 100 for automatic secure data transfer with a motor vehicle, in some embodiments. The system 100 may include an in-vehicle device 1 (e.g., one or more vehicle components which may include a compute device and a wireless communication system) to establish a communication channel 15 with remote device 25, which may be a secure Wi-Fi access point in some examples. A secure Wi-Fi access point, in contrast to an open Wi-Fi access point, may require a device to provide an authentication value, such as a password, before granting the device access through the Wi-Fi access point (and many Wi-Fi accesses points, whether secure or open, may also communicate using encryption once access is granted).

The in-vehicle device 1 may include a processor 12 configured to perform predefined operations in a motor vehicle to perform an automatic secure data transfer without requiring human intervention, and while the motor vehicle is in an unattended power state. The communication channel 15 may be used to securely download any type of data from the remote device 25 to the motor vehicle (e.g., a payload such as software to be installed on the in-vehicle device 1 or another in-vehicle device), or to securely upload a payload from the motor vehicle.

For instance, in some motor vehicle supply chains an inventory of motor vehicles may be present at a port for a time during and/or after unloading from a marine vehicle. Such an inventory may be updated at the port by each motor vehicle's processor 12 communicating with the remote device 25. Also, some or all of the processors 12 may upload data to the remote device 25. Uploaded data may be any type of data such as sensor data, diagnostic codes (if the motor vehicles have sensors operating during transport, a log generated by these sensors could be read to, for instance, assess a condition of the motor vehicles after the marine transport).

The processor 12 may identify a time for establishing the communication channel 15 based a predefined trigger event. The memory 11 may store one or more values 14 to define the trigger event. These values 14 may be embedded in the memory 11 at a time of manufacture, in some examples. The processor 12 may start monitoring based on the predefined trigger event, which may include checking one or more resources (not shown).

The one or more resources may include local, e.g., in-vehicle, and/or remote resources. One example of a remote resource is a geofence. In some examples, the predefined trigger event may include a predetermined proximity to the geofence. The processor 12 may obtain data indicative of the geofence based on a received signal. The processor 12 may compare the data to the values 14, and recognize an occurrence of the predefined event (e.g., may detect that the motor vehicle is in the predetermined proximity from the geofence for establishing the communication channel 15).

One example of a local resource, e.g., in-vehicle resource, is a clock 5 of the motor vehicle. In some examples, the predefined trigger event may include a predetermined time. The processor 12 may obtain data generated by the clock 5, and compare this data to the values 14. The processor 12 may recognize an occurrence of the predefined event (e.g., may detect that a current time is equal to predetermined time for establishing the communication channel 15).

Besides the use of a secure Wi-Fi in some examples, the use of the predetermined trigger event may provide security. For example, the communication channel 15 may be established in a physical geography of the port, which may have physical security such as fences and guards. Also, a predetermined time for establishing the communication channel may provide security because the time may be indicative of the physical location of the motor vehicle (the time may indicate a location of the motor vehicle along a supply chain).

The communication channel 15 may be established on a Wi-Fi transceiver of the wireless interface 7, which may offer strong encryption to protect against man in the middle attacks. In other examples, the communication channel 15 may be established on any portion of the wireless interface 7 including a security feature, such as strong encryption. It may be possible to use a receiver and/or transmitter dedicated for automatic secure data transfer, which may be different than receivers and/or transmitters to be used by a consumer.

As indicated previously, in some examples, the remote device 25 may require devices to authenticate to it before commencement of a data transfer. The remote device 25 may be a secure Wi-Fi access point, in some examples.

Besides a requirement for authentication, the remote device 25 may (in some examples) also include a data store 21 to store data to be downloaded to the motor vehicles (e.g., a motor vehicle update) and a device 22 such as a built-in server or an interface to directly connect to a separate server to provide the vehicle update directly to each motor vehicle. In these examples, in contrast to portable electronic devices that may be operated at service centers, remote device 25 may not require broadband internet access to access a remote server via the Internet. In these examples, the device 22 may download the motor vehicle update directly to the in-vehicle device 1 over communication channel 15. The remote device 25 may not include require any components for connecting to the Internet, and in fact these components may be omitted from the remote device 25 for a number of reasons such as cost savings and/or security considerations. In other examples, the remote device 25 may not include the device 22 and/or the data store 21, and in these examples the remote device 25 may establish a secure tunnel network over the Internet to an OEM server at any time (such as prior to the establishment of the communication channel 15).

The remote device 25 may be a mobile device in some examples, e.g., not just portable but also may be configured to operate while being transported. An inventory of motor vehicles may be arranged very close to each other or other objects, such as in an unloading area of a port or in a shipping apparatus. In some examples, especially depending on a range of the particular transceiver/receiver/transmitter of the wireless interface 7, it may be desirable to transport the mobile remote device 25 around a perimeter of an inventory of unattended motor vehicles and/or between the motor vehicles. In some examples, a mobile remote device 25 may be carried by a person or on a service vehicle (which may be controlled by a person or move (e.g., drive, fly, etc.) autonomously in a more mechanized embodiment, to move along the perimeter or other path).

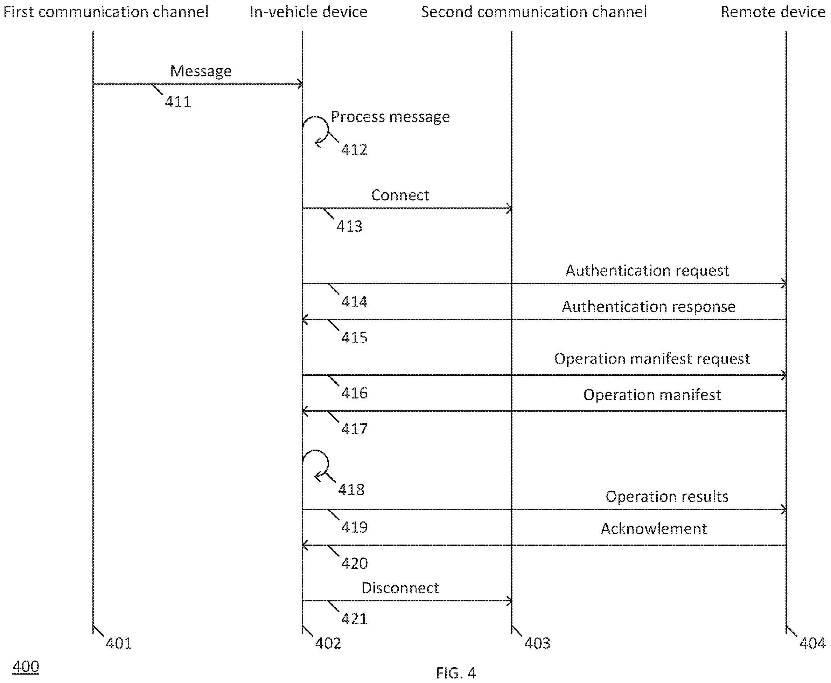

Some examples may use an additional different communication channel (not shown). In these examples, a predetermined trigger event may be associated with the motor vehicle communicating via a different communication channel over a receiver or transceiver of the wireless interface 7, which need not be the same receiver or transceiver used for the communication channel 15. Use of a communication channel as part of a trigger event may provide security in some examples (although this is not required). For example, the processor 12 may not have some information required to establish the communication channel 15 until a different communication channel is established and/or decrypted (e.g., the remote device 25 may be *discoverable* only using information to be recovered from the different communication channel). An embodiment using this different communication channel will be described later in greater detail with respect to FIG. 4. In other examples, this information may be identified by the processor 12 without establishing a different communication channel (e.g., the processor 12 may access stored information in a memory of the motor vehicle).

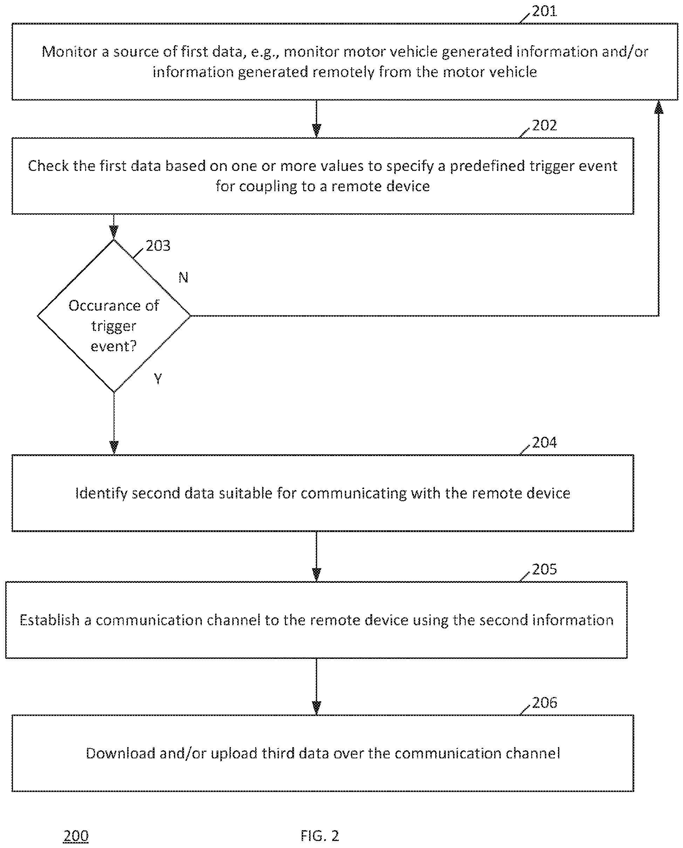

FIG. 2 is a simplified flow chart illustrating some of the operations 200 that may be performed by the in-vehicle device 1 of FIG. 1, in some embodiments. In block 201, the in-vehicle device 1 may monitor a source of first data, e.g., monitor motor vehicle generating information and/or information generated remotely from the motor vehicle. In block 202, the in-vehicle device 1 may check the first data based on one or more values to specify a predefined trigger event for coupling to a remote device. A portion of the one or more values may be embedded at vehicle manufacture and/or a portion of the one or more values may be dynamically provided by a call (such as an incoming cellular call including encrypted information recoverable to obtain the portion of the one or more values). In diamond 203, the in-vehicle device 1 may ascertain whether the predefined trigger event occurred. If the predefined trigger event did not occur, the process may return to block 201 until, say, a next interval (regular or otherwise) for performing diamond 203.

In block 204, the in-vehicle device 1 may identify second data suitable for communicating with the remote device. The second data may be located in a memory of the in-vehicle device 1 or a memory accessible to the in-vehicle device 1 prior to the occurrence of the trigger event. In other examples, the second data may be received as part of the triggered event and/or may become accessible as part of the trigger event. The second data may include information about a characteristic of the remote device, e.g., information for authenticating the in-vehicle device 1 to the remote device, an address or other information for discovering the remote device, etc.

In block 205, the in-vehicle device 1 may establish a communication channel to the remote device using the second information. In block 206, the in-vehicle device 1 may download and/or upload third data over the communication channel. The third data may include a motor vehicle update and/or information to be uploaded from the motor vehicle.

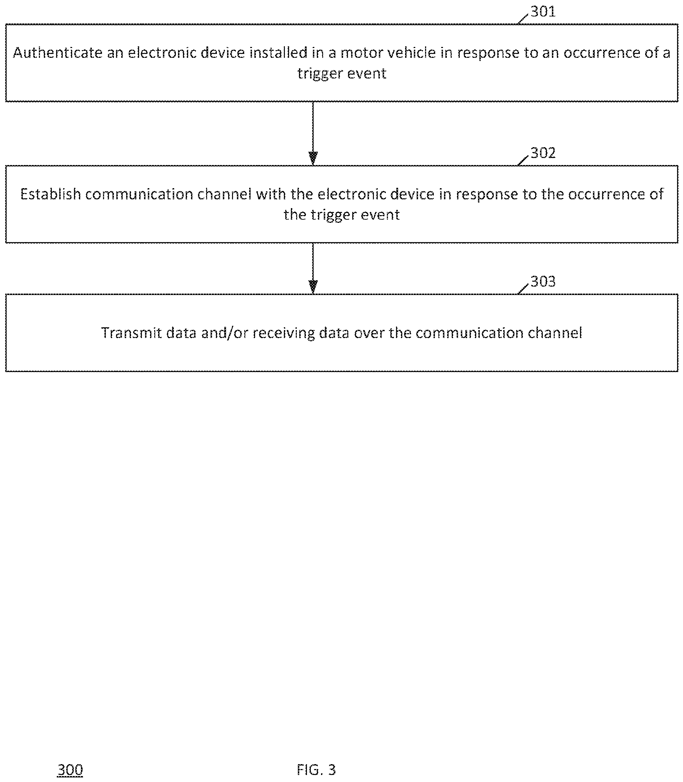

FIG. 3 is a simplified flow chart illustrating some of the operations 300 that may be performed other devices described with reference to FIG. 1, in some embodiments. In block 301, the remote device 25 may authenticate an electronic device installed in a motor vehicle in response to the occurrence of a predefined trigger event. In block 302, the remote device 25 may establish a communication channel with the electronic device in response to the occurrence of the trigger event. In block 303, the remote device 25 may transmit and/or receive data over the communication channel.

FIG. 4 is a message sequence chart illustrating some of the operations that may be performed in embodiments that utilize more than one communication channel. The in-vehicle device 402 may perform any of the operations performed by the in-vehicle device 1 (FIG. 1), and the remote device 404 may perform any of the operations performed by the remote device 25 (FIG. 1).

The second communication channel 403 may be similar to the communications channel 15 (FIG. 1). The first communication channel 401 may be established over the Internet using a different portion of a wireless interface of the motor vehicle (e.g., a different transceiver, a different receiver, different transmitter, etc.), and may extend to a server such as an OEM server. The receiver/transceiver over which the first communication channel 401 is established need not be the same bandwidth and/or include the same security as the receiver/transceiver over which the second communication channel 403 is established. In one example, the receiver/transceiver over which the first communication channel 401 is established is a cellular transceiver that may be lower bandwidth than a different transceiver/receiver/transmitter over which the second communication channel 403 is established (e.g., a Wi-Fi transceiver), and in some examples the connection may be performed using a motor vehicle transmission control unit (TCU) via the cellular connection and over the Internet. In other embodiments, the first communication channel 401 may be an NFC (near field communications) device, a short range wireless transceiver such as a Bluetooth transceiver, a Wi-Fi access point (e.g., different than the secure Wi-Fi access point, such as an open Wi-Fi access point).

The server (again not shown, may be the OEM server or other server different than any server corresponding to the remote device 404) may establish the first communication channel 401 with the in-vehicle device 402 in order to trigger an automatic secure data transfer with the remote device 404. As already mentioned, the first channel 401 need not include the same security as the second communication channel 403 (the first communication channel 401 may be non-secure, in some examples).

The server may send the message 411 to the in-vehicle device 402 via the first communication channel 401. The message 411 may be sent via SMS (short message service) or over an Internet connection using a secure networking protocol such as SSL (secure socket layer). The message 411 may be encrypted using a public/private algorithm (the public key may be resident on the motor vehicle).

The message 411 may include a list of known secure communication channels. The message 411 may include connection information, such as one or more SSIDs (service set identifiers), passwords for each SSID, security type information for each SSID, or the like, or combinations thereof (for each of the listed secure communication channels). The message 411 may include one or more values to specify a predefined trigger event, e.g., information about a selected time, information about a remote resource such as a geofence, or the like, or combinations thereof.

The message 411 may be sent as simple byte array using low-level communication APIs (application programming interfaces) of the sender. The message 411 may be sent by a Wi-Fi access point, such as an open Wi-Fi access point.

In operation 412, the in-vehicle device 402 may discover (e.g., scan for a secure communication channel on the list) and connect to the second communication channel 403 based on the list. Operation 412 may be performed immediately following identifying message 411, or the trigger event information may specify trigger conditions associated with a different time to perform the discovery. In some example, the in-vehicle device 402 may be configured to attempt to connect to a hidden Wi-Fi access point using SSIDs in the list (for instance instead of scanning or if scanning fails). In operation 413, the in-vehicle device 402 may establish a connection to the remote device 404 over the connected second communication channel 403. The in-vehicle device 402 may send an authentication request 414 (which may be based on an authentication value recovered from the first communication channel 401) to the remote device 404. The remote device 404 may send back an authentication response 415, for instance authenticating the in-vehicle device 402 to the remote device 404. This authentication handshake may provide another layer of security.

The in-vehicle device 402 may send an operation manifest request 416 to identify whether to perform any operations (e.g., to identify whether to perform an update, change a configuration, etc.). This may identify one or more of: operating system update, user application update, map update, preferences update, or the like, or combinations thereof. The remote device 404 (e.g., a server thereof) may send an operation manifest 417, which may cause the in-vehicle device 402 to perform operations 418 based on selections identified in the manifest 417. The in-vehicle device 402 may transmit a message 419 including operation results, and the remote device 404 (e.g., a server thereof) may send an acknowledgement 420. The in-vehicle device 402 may perform a disconnect 421 in response to receiving the acknowledgement 420 and/or reaching a timeout.

In some examples, the principles described above can be applied when a vehicle owner takes their motor vehicle into a dealership for scheduled maintenance. The vehicle owner can wait in a waiting room, and the motor vehicle can - unattended in the parking lot - perform any of the operations described herein to perform an automatic secure data transfer (the motor vehicle may connect to a hidden Wi-Fi access point at the dealership in some examples). The motor vehicle need not be brought into the service center nor be attended in the parking lot. In some examples, the motor vehicle and/or the OEM server may send a message to the vehicle owner's personal portable device and/or a dealership personnel compute device when complete.

In some examples, the principles described above can be applied to an in-service fleet of motor vehicles or a returned rental motor vehicle. A fleet driver or customer may return a motor vehicle to a parking lot to leave the motor vehicle until the next workday or to return the rental. In the parking lot, the motor vehicle may perform any of the operations described herein to perform an automatic secure data transfer to update the motor vehicle and/or pull data from the motor vehicle (say sensor data collected for the day).

In some examples, the principles describe above can be applied to automatic secure data transfer for any portable device that requires secure updating or that stores high privacy value data, including but not limited to medical devices intended for hospital or care facility, industrial devices, Internet of Things (IoT) devices, household IoT products such as home-security, home-automation, aircraft and related aviation equipment, remote monitoring devices, or the like, or combinations thereof, s

### Examples

Example 1 is an in-vehicle electronic device to operate in a motor vehicle in an unattended power state, the in-vehicle electronic device comprising: a wireless interface to communicate with a remote secure network resource; and a memory to store one or more values to specify a predefined trigger event for coupling the motor vehicle in the unattended power state to the remote secure network resource; a processor configured to: identify a resource to be monitored; recognize an occurrence of a predefined trigger event by checking first data obtained responsive to monitoring the identified resource against the one or more values; in responsive to a recognition of the occurrence of a predefined trigger event, identify second data suitable for coupling the in-vehicle electronic device to the remote secure network resource; establish a communication channel to the remote secure network resource via the wireless interface using the second data; and download third data over the communication channel to the motor vehicle in the unattended power state or upload the third data over the communication channel from the motor vehicle in the unattended power state.
Example 2 includes the subject matter of example 1 or any other example herein, wherein the first data comprises content of a signal received over a communication channel established independently of the remote secure network resource.
Example 3 includes the subject matter of any of examples 1-2 or any other example herein, wherein one of the communication channels is established using a first receiver of the wireless interface or a transmitter that corresponds to the first receiver and the other of the communication channels is established using a second different receiver of the wireless interface.
Example 4 includes the subject matter of any of examples 1-3 or any other example herein, wherein the first receiver includes a receiver of a Wi-Fi transceiver and the second receiver includes a receiver of at least one of a cellular transceiver or a short range wireless transceiver.
Example 5 includes the subject matter of any of examples 1-4 or any other example, wherein the first data comprises connection information to establish a connection over which the communication channel extends.
Example 6 includes the subject matter of any of examples 1-5 or any other example herein, wherein the connection information comprises a service set identifier (SSID) and a security type value.
Example 7 includes the subject matter of any of examples 1-6 or any other example herein, wherein the connection information comprises a password.
Example 8 includes the subject matter of any of examples 1-7 or any other example herein, wherein the first data comprises information indicative of the motor vehicle having moved to within a predefined proximity of a reference.
Example 9 includes the subject matter of any of examples 1-8 or any other example herein, wherein the reference comprises a geofence.
Example 10 includes the subject matter of any of examples 1-9 or any other example herein, wherein the predetermined trigger event comprises a scheduled time.
Example 11 includes the subject matter of any of examples 1-10 or any other example herein, wherein the second data comprises connection data resident in an electronic memory of the motor vehicle prior to the occurrence of the predefined event.
Example 12 includes the subject matter of any of examples 1-11 or any other example herein, wherein the third data comprises an update to be downloaded to the motor vehicle.
Example 13 includes the subject matter of any of examples 1-12 or any other example herein, wherein the secure network resource comprises a secure Wi-Fi access point.
Example 14 includes the subject matter of any of examples 1-13 or any other example herein, wherein the identified resource comprises an in-vehicle resource.
Example 15 includes the subject matter of any of examples 1-14 or any other example herein, wherein the identified resource is of a device corresponding to a geofence or other remote device separate from the motor vehicle.
Example 16 is a method, comprising: establishing a first communication channel with a motor vehicle in an unattended power state; transmitting, over the first communication channel, data representing an authentication value suitable for establishing a second communication channel that couples the motor vehicle and a wireless access point remote from the motor vehicle; wherein the second communication channel is different than the first communication channel; establishing, using the wireless access point, the second communication channel with the electronic device responsive to the transmitting over the first communication channel; and transmitting or receiving a payload over the second communication channel.
Example 17 includes the subject matter of example 16 or any other example herein, wherein the second communication channel includes a layer of security not present in the first communication channel.
Example 18 includes the subject matter of any of examples 16-17 or any other example herein, wherein the data representing the authentication value comprises encrypted data.
Example 19 includes the subject matter of any of examples 16-18 or any other example herein, wherein the wireless access point comprises a hidden access point identified by information represented by the data, and wherein establishing the second communication channel comprises connecting to the hidden access point responsive to at least one unsuccessful scanning attempt.
Example 20 includes the subject matter of any of examples 16-19 or any other example herein, wherein the wireless access point comprises a first secure access point to operate based on a security feature, and wherein the first communication channel is established using a second different access point that does not operate based on said security feature.
Example 21 is an electronic device comprising: a first input/output interface; a second input/output interface that is different than the first input/output interface; and circuitry to identify a secure channel corresponding to remote secure network resource, the circuitry configured to: ascertain whether to utilize the first input/output interface to obtain information usable for authenticating the electronic device with the secure network resource; in response to an ascertainment to use the first input/output interface to obtain information usable for authenticating the electronic device with the secure network resource, obtain first encrypted data via the first input/output interface and recover, from the first encrypted data, said information; and establish a connection to the secure network resource over the second input/output interface using said information; and download or upload second data that is different than the first encrypted data over the connection.
Example 22 may include the subject matter of example 21 or any other example herein, wherein the second data comprises at least one of motor vehicle software, diagnostic information collected by a motor vehicle in which the electronic device is installed, or private data associated with an operator of the motor vehicle (e.g., location information, user preferences, or the like).
Example 23 may include the subject matter of any of examples 21-22 or any other example herein, wherein the second data is encrypted, and encrypted differently than the first encrypted data.
Example 24 may include the subject matter of any of examples 21-23 or any other example herein, wherein obtaining the first encrypted data further comprises establishing a packet data cellular connection (e.g., a locally initiated packet data cellular connection) and downloading the first encrypted data over the packet data cellular connection.
Example 25 may include the subject matter of any of examples 21-24 or any other example herein, wherein the connection with the secure network resources is established using a WI-FI connection.
Example 26 may include the subject matter of any of examples 21-25 or any other example herein, wherein the encrypted first data is obtained from a publically accessible network device (e.g., an internet accessible device), and wherein the second data is obtained from a different private network device (e.g., not internet accessible).
Example 27 may include the subject matter of any of examples 21-26 or any other example herein, wherein said connection is more secure than a connection over which the first encrypted data is obtained.
Example 28 may include the subject matter of any of examples 21-27 or any other example herein, wherein said second input/output interface is greater bandwidth than the first input/output interface.
Example 29 may include the subject matter of any of examples 21-28 or any other example herein, wherein the circuitry is configured to recover said information using a first public key of a public/private key pair, the public key stored on the electronic device, wherein said information includes a second different key usable for connecting to the secure network resource.
Example 30 may include the subject matter of any of examples 21-29 or any other example herein, wherein said information comprises a service set identifier (SSID) and password for an SSID access point (e.g., a hidden SSID access point).
Example 31 may include the subject matter of any of examples 21-30 or any other example herein, wherein the electronic device discovers at least one of the SSID or password in response to said recovery of the information (e.g., the discovered at least one of SSID or password is previously unknown to the electronic device prior to a time of decryption of the first encrypted data).
Example 32 may include the subject matter of any of examples 21-31 or any other example herein, wherein the electronic device discovers at least a portion of said information in response to said recovery of the information (e.g., the discovered portion of said information is previously unknown to the electronic device prior to a time of decryption of the first encrypted data).
Example 33 may include the subject matter of any of examples 21-32 or any other example herein, wherein the circuitry comprises a computing device of a motor vehicle.
Example 34 may include the subject matter of any of examples 21-33 or any other example herein, wherein the circuitry is further configured to: monitor for a wireless signal that corresponds to at least one of a transmitter external to the motor vehicle or a sensor external to the motor vehicle and includes predetermined data or data corresponding to a predetermined event; wherein the ascertainment is performed responsive to detection of said wireless signal.
Example 35 may include the subject matter of any of examples 21-34 or any other example herein, wherein the electronic device is installed in portable equipment (e.g., a motor vehicle) and the wireless signal is associated with a geo-fence or device to detect the portable equipment near a predetermined geographic location.
Example 36 may include the subject matter of any of examples 21-35 or any other example herein, wherein the circuitry is further configured to: in response to an ascertainment to not use the first input/output interface to obtain information usable for authenticating the electronic device with the secure network resource, identifying said information from a memory device of a motor vehicle.
Example 37 may include the subject matter of any of examples 21-36 or any other example herein, wherein said information comprises a list of known secure communication channels.
Example 38 may include the subject matter of any of examples 21-37 or any other example herein, wherein the information is identified from protected memory.
Example 39 may include the subject matter of any of examples 21-38 or any other example herein, wherein the circuitry is confirmed to obtain a schedule from a remote device, and the ascertainment is in response to a clock and/or counter reaching a value corresponding to the schedule.
Example 40 may include the subject matter of any of examples 21-39 or any other example herein, wherein the wireless signal is received over at least one of the first input/output interface, the second input/output interface, or a third different input/output interfaces of the electronic device.
Example 41 may include the subject matter of any of examples 21-40 or any other example herein, wherein the first encrypted information is obtained from a public network gateway (e.g., forwarded by the public network gateway), and wherein the second data is obtained independently of any network gateways (e.g., directly from an Access Point that does not operate as a public network gateway).
Example 42 may include the subject matter of any of examples 21-41 or any other example herein, wherein the connection is established to (e.g., directly to) a portable wireless access point.
Example 43 may include the subject matter of any of examples 21-42 or any other example herein, wherein the first input/output interface comprises at least one of a cellular transceiver, a short range wireless transceiver (e.g., a Bluetooth transceiver), or Near Field Communication (NFC) transceiver.
Example 44 may include the subject matter of any of examples 21-43 or any other example herein, wherein each of the first and second input/interfaces comprises a distinct wireless interface.
Example 45 may include the subject matter of any of examples 21-44 or any other example herein, wherein establishing the connection further comprises tunneling to the secure network resource based on said information.
Example 46 may include the subject matter of any of examples 21-45 or any other example herein, wherein the circuitry operates in an unattended vehicle.
Example 47 may include the subject matter of any of examples 21-46 or any other example herein, wherein the second data comprises a motor vehicle software (e.g., a motor vehicle software update and/or motor vehicle firmware).
Example 48 is a motor vehicle, comprising: circuitry to identify a secure channel corresponding to a first network resource, the circuitry configured to: ascertain whether to communicate over a non-secure channel to obtain information from a second different network resource, the information usable for authenticating a component of the motor vehicle with the secure network resource; in response to an ascertainment to communicate over the non-secure channel, obtain first encrypted data from the second network resource and recover, from the encrypted data, said information; and establish a connection over the secure channel to the first network resource over using said information; and download or upload second data that is different than the first encrypted data over the connection.
Example 49 may include the subject matter of example 48, wherein the second network resource comprises a remote server.
Example 50 may include the subject matter of any of examples 48-49 or any other example herein, the circuitry configured to perform the ascertainment at a scheduled time or monitor for a wireless signal that corresponds to at least one of a transmitter external to the motor vehicle or a sensor external to the motor vehicle and includes predetermined data or data corresponding to a predetermined event; wherein the ascertainment is performed responsive to the scheduled time or detection of said wireless signal.
Example 51 may include the subject matter of any of examples 48-50 or any other example herein, wherein wireless signal is associated with a geo-fence or device to detect the motor vehicle near a predetermined geographic location.
Example 52 may include the subject matter of any of examples 48-51 or any other example herein, wherein the circuitry is further configured to: in response to an ascertainment to not use the non-secure channel to obtain said information, identifying said information from a memory device coupled to the motor vehicle or a memory device of the motor vehicle.
Example 53 may include the subject matter of any of examples 48-52 or any other example herein, wherein said information comprises a list of one or more secure communication channels.
Example 54 may include the subject matter of any of examples 48-53 or any other example herein, wherein the circuitry is configured to discover a list of one or more secure communication channels responsive to decryption of said first encrypted data.
Example 55 may include a method for identifying a secure channel corresponding to a first network resource, the method comprising: ascertaining whether to communicate over a non-secure channel to obtain information from a second different network resource, the information usable for authenticating a component of the motor vehicle with the secure network resource; in response to an ascertainment to communicate over the non-secure channel, obtain first encrypted data from the second network resource and recovering, from the encrypted data, said information; and establishing a connection over the secure channel to the first network resource over using said information; and downloading or uploading second data that is different than the first encrypted data over the connection.

Most of the equipment discussed above comprises hardware and associated software. For example, the typical in-vehicle and/or remote device is likely to include one or more processors and software executable on those processors to carry out the operations described. We use the term software herein in its commonly understood sense to refer to programs or routines (subroutines, objects, plug-ins, etc.), as well as data, usable by a machine or processor. As is well known, computer programs generally comprise instructions that are stored in machine-readable or computer-readable storage media. Some embodiments of the present invention may include executable programs or instructions that are stored in machine-readable or computer-readable storage media, such as a digital memory. We do not imply that a "computer" in the conventional sense is required in any particular embodiment. For example, various processors, embedded or otherwise, may be used in equipment such as the components described herein.

Memory for storing software again is well known. In some embodiments, memory associated with a given processor may be stored in the same physical device as the processor ("on-board" memory); for example, RAM or FLASH memory disposed within an integrated circuit microprocessor or the like. In other examples, the memory comprises an independent device, such as an external disk drive, storage array, or portable FLASH key fob. In such cases, the memory becomes "associated" with the digital processor when the two are operatively coupled together, or in communication with each other, for example by an I/O port, network connection, etc. such that the processor can read a file stored on the memory. Associated memory may be "read only" by design (ROM) or by virtue of permission settings, or not. Other examples include but are not limited to WORM, EPROM, EEPROM, FLASH, etc. Those technologies often are implemented in solid state semiconductor devices. Other memories may comprise moving parts, such as a conventional rotating disk drive. All such memories are "machine readable" or "computer-readable" and may be used to store executable instructions for implementing the functions described herein.

A "software product" refers to a memory device in which a series of executable instructions are stored in a machine-readable form so that a suitable machine or processor, with appropriate access to the software product, can execute the instructions to carry out a process implemented by the instructions. Software products are sometimes used to distribute software. Any type of machine-readable memory, including without limitation those summarized above, may be used to make a software product. That said, it is also known that software can be distributed via electronic transmission ("download"), in which case there typically will be a corresponding software product at the transmitting end of the transmission, or the receiving end, or both.

Having described and illustrated the principles of the invention in a preferred embodiment thereof, it should be apparent that the invention may be modified in arrangement and detail without departing from such principles. The scope of protection is defined by the following claims.

## Claims

1. An in-vehicle electronic device (1) to operate in a motor vehicle in an unattended power state, the in-vehicle electronic device comprising:
a wireless interface (7) to communicate securely with a remote network resource (25); and
a memory (11) to store one or more values to specify a predefined trigger event (14) for coupling the motor vehicle in the unattended power state to the remote network resource;
a processor (12) configured to:
identify a resource to be monitored;
recognize an occurrence of the predefined trigger event by checking first data obtained responsive to monitoring the identified resource against the one or more values;
in response to a recognition of the occurrence of a predefined trigger event, identify second data suitable for coupling the in-vehicle electronic device to the remote network resource;
establish a communication channel (15) to the remote network resource via the wireless interface using the second data; and
download third data over the communication channel to the motor vehicle in the unattended power state or upload the third data over the communication channel from the motor vehicle in the unattended power state.

2. The in-vehicle electronic device of claim 1, wherein the first data comprises content of a signal received over a communication channel established independently of the remote network resource, or
information indicative of the motor vehicle having moved to within a predefined proximity of a reference, for example, a reference comprising a geofence.

3. The in-vehicle electronic device of claim 2, wherein one of the communication channels is established using a first receiver of the wireless interface or a transmitter that corresponds to the first receiver and the other of the communication channels is established using a second different receiver of the wireless interface.

4. The in-vehicle electronic device of claim 3, wherein the first receiver includes a receiver of a Wi-Fi transceiver and the second receiver includes a receiver of at least one of a cellular transceiver or a short range wireless transceiver.

5. The in-vehicle electronic device of claim 3, wherein the first data comprises connection information to establish a connection over which the communication channel extends, optionally wherein the connection information comprises a service set identifier (SSID) and a security type value or a password.

6. The in-vehicle electronic device of claim 1, wherein the predetermined trigger event comprises a scheduled time.

7. The in-vehicle electronic device of claim 1, wherein the second data comprises connection data resident in an electronic memory of the motor vehicle prior to the occurrence of the predefined event.

8. The in-vehicle electronic device of claim 1, wherein the third data comprises an update to be downloaded to the motor vehicle.

9. The in-vehicle electronic device of claim 1, wherein the network resource comprises a secure Wi-Fi access point.

10. The in-vehicle electronic device of claim 1, wherein the identified resource comprises an in-vehicle resource, or is of a device corresponding to a geofence or other remote device separate from the motor vehicle.

## Patentansprüche

1. Fahrzeuginternes elektronisches Gerät (1) zum Arbeiten in einem Kraftfahrzeug in einem unbeaufsichtigten Leistungszustand, wobei das fahrzeuginterne elektronische Gerät Folgendes umfasst:
eine drahtlose Schnittstelle (7) zum sicheren Kommunizieren mit einer entfernten Netzwerkressource (25); und
einen Speicher (11) zum Speichern von einem oder mehreren Werten zum Vorgeben eines vordefinierten Trigger-Ereignisses (14) zum Koppeln des Kraftfahrzeugs im unbeaufsichtigten Leistungszustand mit der entfernten Netzwerkressource;
einen Prozessor (12), konfiguriert zum:
Identifizieren einer zu überwachenden Ressource;
Erkennen eines Auftretens des vordefinierten Trigger-Ereignisses durch Prüfen von ersten Daten, die als Reaktion auf die Überwachung der identifizierten Ressource anhand der ein oder mehreren Werte erhalten werden;
Identifizieren, als Reaktion auf eine Erkennung des Auftretens eines vordefinierten Trigger-Ereignisses, von zweiten Daten, die zum Koppeln des fahrzeuginternen elektronischen Geräts mit der entfernten Netzwerkressource geeignet sind;
Aufbauen eines Kommunikationskanals (15) zu der entfernten Netzwerkressource über die drahtlose Schnittstelle anhand der zweiten Daten; und
Herunterladen von dritten Daten über den Kommunikationskanal auf das Kraftfahrzeug im unbeaufsichtigten Leistungszustand oder Heraufladen der dritten Daten über den Kommunikationskanal von dem Kraftfahrzeug im unbeaufsichtigten Leistungszustand.

2. Fahrzeuginternes elektronisches Gerät nach Anspruch 1, wobei die ersten Daten Inhalt eines Signals umfassen, empfangen über einen Kommunikationskanal, der unabhängig von der entfernten Netzwerkressource aufgebaut wurde, oder
Informationen, die anzeigen, dass sich das Kraftfahrzeug innerhalb einer vordefinierten Nähe zu einer Referenz bewegt hat, zum Beispiel einer Referenz, die einen Geofence umfasst.

3. Fahrzeuginternes elektronisches Gerät nach Anspruch 2, wobei einer der Kommunikationskanäle mit einem ersten Empfänger der drahtlosen Schnittstelle oder einem Sender entsprechend dem ersten Empfänger aufgebaut wird und der andere der Kommunikationskanäle mit einem zweiten, anderen Empfänger der drahtlosen Schnittstelle aufgebaut wird.

4. Fahrzeuginternes elektronisches Gerät nach Anspruch 3, wobei der erste Empfänger einen Empfänger eines WiFi-Transceivers beinhaltet und der zweite Empfänger einen Empfänger eines zellulären Transceivers und/oder eines drahtlosen Kurzstrecken-Transceivers beinhaltet.

5. Fahrzeuginternes elektronisches Gerät nach Anspruch 3, wobei die ersten Daten Verbindungsinformationen zum Aufbauen einer Verbindung umfassen, über die der Kommunikationskanal verläuft, wobei optional die Verbindungsinformationen einen Service Set Identifier (SSID) und einen Sicherheitstypwert oder ein Passwort umfassen.

6. Fahrzeuginternes elektronisches Gerät nach Anspruch 1, wobei das vorbestimmte Trigger-Ereignis eine geplante Zeit umfasst.

7. Fahrzeuginternes elektronisches Gerät nach Anspruch 1, wobei die zweiten Daten Verbindungsdaten umfassen, die sich vor dem Auftreten des vordefinierten Ereignisses in einem elektronischen Speicher des Kraftfahrzeugs befinden.

8. Fahrzeuginternes elektronisches Gerät nach Anspruch 1, wobei die dritten Daten ein auf das Kraftfahrzeug herunterzuladendes Update umfassen.

9. Fahrzeuginternes elektronisches Gerät nach Anspruch 1, wobei die Netzwerkressource einen sicheren WiFi-Zugangspunkt umfasst.

10. Fahrzeuginternes elektronisches Gerät nach Anspruch 1, wobei die identifizierte Ressource eine fahrzeuginterne Ressource umfasst oder von einem Gerät entsprechend einem Geofence oder einem anderen entfernten Gerät separat von dem Kraftfahrzeug ist.

## Revendications

1. Un dispositif électronique embarqué dans un véhicule (1) destiné à un actionnement dans un véhicule à moteur dans un état d'énergie sans surveillance, le dispositif électronique embarqué dans un véhicule comprenant :
une interface sans fil (7) destinée à une communication sécurisée avec une ressource de réseau distante (25), et
une mémoire (11) destinée à la conservation en mémoire d'une ou de plusieurs valeurs destinées à la spécification d'un événement de déclenchement prédéfini (14) destiné au couplage du véhicule à moteur dans l'état d'énergie sans surveillance à la ressource de réseau distante,
un processeur (12) configuré de façon à :
identifier une ressource à surveiller,
reconnaître une occurrence de l'événement de déclenchement prédéfini par la vérification de premières données obtenues en réponse à la surveillance de la ressource identifiée vis-à-vis des une ou plusieurs valeurs,
en réponse à une reconnaissance de l'occurrence d'un événement de déclenchement prédéfini, identifier des deuxièmes données qui conviennent au couplage du dispositif électronique embarqué dans un véhicule à la ressource de réseau distante,
établir un canal de communication (15) vers la ressource de réseau distante par l'intermédiaire de l'interface sans fil au moyen des deuxièmes données, et
télécharger vers l'aval des troisièmes données par l'intermédiaire du canal de communication vers le véhicule à moteur dans l'état d'énergie sans surveillance ou télécharger vers l'amont les troisièmes données par l'intermédiaire du canal de communication à partir du véhicule à moteur dans l'état d'énergie sans surveillance.

2. Le dispositif électronique embarqué dans un véhicule selon la Revendication 1, où les premières données comprennent un contenu d'un signal reçu par l'intermédiaire d'un canal de communication établi indépendamment de la ressource de réseau distante, ou
des informations indicatives du fait que le véhicule à moteur s'est déplacé à l'intérieur d'une proximité prédéfinie d'une référence, par exemple, une référence comprenant une zone de géorepérage.

3. Le dispositif électronique embarqué dans un véhicule selon la Revendication 2, où un des canaux de communication est établi au moyen d'un premier récepteur de l'interface sans fil ou d'un émetteur qui correspond au premier récepteur, et l'autre canal des canaux de communication est établi au moyen d'un deuxième récepteur différent de l'interface sans fil.

4. Le dispositif électronique embarqué dans un véhicule selon la Revendication 3, où le premier récepteur comprend un récepteur d'un émetteur-récepteur Wi-Fi et le deuxième récepteur comprend un récepteur d'au moins un émetteur-récepteur parmi un émetteur-récepteur cellulaire ou un émetteur-récepteur sans fil à courte portée.

5. Le dispositif électronique embarqué dans un véhicule selon la Revendication 3, où les premières données comprennent des informations de connexion destinées à l'établissement d'une connexion par l'intermédiaire de laquelle le canal de communication s'étend, éventuellement où les informations de connexion comprennent un identifiant d'ensemble de services (SSID) et une valeur de type de sécurité ou un mot de passe.

6. Le dispositif électronique embarqué dans un véhicule selon la Revendication 1, où l'événement de déclenchement prédéterminé comprend une heure planifiée.

7. Le dispositif électronique embarqué dans un véhicule selon la Revendication 1, où les deuxièmes données comprennent des données de connexion résidantes dans une mémoire électronique du véhicule à moteur avant l'occurrence de l'événement prédéfini.

8. Le dispositif électronique embarqué dans un véhicule selon la Revendication 1, où les troisièmes données comprennent une mise à jour à télécharger vers le véhicule à moteur.

9. Le dispositif électronique embarqué dans un véhicule selon la Revendication 1, où la ressource de réseau comprend un point d'accès Wi-Fi sécurisé.

10. Le dispositif électronique embarqué dans un véhicule selon la Revendication 1, où la ressource identifiée comprend une ressource embarquée dans un véhicule, ou est d'un dispositif correspondant à une zone de géorepérage ou un autre dispositif distant séparé du véhicule à moteur.
